# EUROPÄISCHE PATENTANMELDUNG

(11) **EP 0 623 530 A1**
(43) Veröffentlichungstag der Anmeldung: **09.11.1994**
(21) Anmeldenummer: 94106921.3
(22) Anmeldetag: 03.05.1994
(51) Int. Cl.: B65G 21/06

(54) **Hängefördereinrichtung mit einem Montageprofilsatz**

(30) Priorität: 03.05.1993 DE 9306657 U
(71) Anmelder: RSL LOGISTIK GMBH & CO, D-86899 Landsberg (DE)
(72) Erfinder: Robu, Johann, D-82140 Olching (DE); Enderlein, Robby, D-86899 Landsberg (DE)
(74) Vertreter: Grünecker, Kinkeldey, Stockmair & Schwanhäusser Anwaltssozietät

(57) **Zusammenfassung**

Es wird eine Hängefördereinrichtung (19) beschrieben, die einfach und wenig zeitaufwendig montiert werden kann. Zu diesem Zweck ist ein Montageprofilsatz (1, 13) zum Montieren eines Schienensystems (2) vorgesehen, der wenigstens ein mit einer Mehrzahl von Vertiefungen (6) versehenes, erstes Profilelement (1) und wenigstens ein mit einer Mehrzahl in die Vertiefung (6) eingreifenden Erhöhungen (14) versehenes zweites Profilelement (13) enthält, wobei die Breite (B) jeder Erhöhung (14) in Draufsicht in zwei winklig zueinander verlaufenden Richtungen gleich ist und der Breite (B) der Vertiefung (6) in Draufsicht entspricht.

## Beschreibung

Die Erfindung bezieht sich auf eine Hängefördereinrichtung mit einem Montageprofilsatz zum Montieren eines Schienensystems.

Die beispielsweise aus der EP-PS 318 057 bekannten Schienen für eine Hängefördereinrichtung bestehen aus einem stranggepreßten Profil, das vor dem Einbau in passende Stücke geschnitten wird. Der Einbau der Schienen erfolgt entsprechend den räumlichen Gegebenheiten und der gewünschten Funktion am Einsatzort mit Hilfe herkömmlicher Träger und Beschlägen, wie beispielsweise Winkeleisen, Bandeisen, Stäben oder dgl. Da die Gegebenheiten am Einsatzort von Fall zu Fall sehr unterschiedlich sein können, erfordert der Einbau eines Schienensystems für eine Hängefördereinrichtung sehr viel Zeit.

Der Erfindung liegt somit die Aufgabe zugrunde, den Einbau von Schienen einer Hängefördereinrichtung zu erleichtern.

Die Aufgabe wird durch den in Anspruch 1 angegebenen Montageprofilsatz gelöst.

Durch die Verwendung des erfindungsgemäßen Montageprofilsatzes beim Einbau von Schienen einer Hängefördereinrichtung können bestimmte Positionen und Ausrichtungen der Teile untereinander vorab festgelegt werden, so daß der Einbau wesentlich erleichtert wird. Beispielsweise kann eine einzige Erhöhung in zwei winklig zueinander verlaufenden Richtungen in jede der Vertiefungen eingesetzt werden, so daß sich eine große Vielfalt von Montagepositionen ergibt.

Montageprofile an sich sind bekannt. So zeigt beispielsweise die EP-A-407 482 einen Montageprofilträger zum Montieren von Transportbändern, der einen rechteckigen Querschnitt und an seinen langen und kurzen Seiten verteilt angeordnete, hinterschnittene Nuten zweier verschiedener Größen aufweist. Die äußeren Seiten der die längeren Nuten begrenzenden Stege und die inneren Seiten der die schmaleren Nuten begrenzenden Stege sind jeweils mit Rastvertiefungen versehen, in die Rast-Gegenstücke einschnappen können, die an Flanschen einer Befestigungsvorrichtung vorgesehen sind. Die Befestigungsvorrichtung kann somit einerseits auf der schmaleren Seite des Trägerprofilstranges aufgesetzt werden, wobei die Flansche über das Trägerprofil vorstehen, oder mit den Flanschen in die schmaleren Nuten an der langen Seite des Trägerprofilquerschnittes eingesetzt werden. Die Befestigungsvorrichtung soll dazu dienen, zwei gleichartige Trägerprofilstränge miteinander zu verbinden, weitere Montagemöglichkeiten ergeben sich jedoch nicht. Insbesondere kann die Befestigungsvorrichtung nicht in zwei winklig zueinander verlaufende Richtungen aufgesetzt werden, da die Verbindungsrichtung durch die Lage der Rastvorrichtungen festgelegt ist.

Einen ähnlichen Trägerprofilstrang zeigt die EP-A-36 958. Auch dieser Trägerprofilstrang weist hinterschnittene Nuten verschiedener Größen auf, wobei jedoch nur eine dieser Nuten in der Größe derart angepaßt ist, daß ein Führungsprofil für ein Förderband eingesetzt werden kann. Auch das Führungsprofil des Förderbandes ist somit nur in einer bestimmten Lage und einer bestimmten Anordnung mit dem Trägerprofil zu verbinden.

Beide Trägerprofile können zwar bei Transporteinrichtungen verwendet werden, eignen sich jedoch nicht zum Montieren von Schienen, wenn die Schienen in unterschiedlichen Positionen und Stellungen montiert werden müssen.

Vorteilhafte Weiterbildungen der Erfindung sind den Unteransprüchen zu entnehmen.

Sowohl die Vertiefungen als auch die Erhöhungen sind gemäß Anspruch 2 nur zum Positionieren gedacht und haben keine Haltefunktion, die ein Montage erschweren könnte.

In der Ausgestaltung nach Anspruch 3, verlaufen die Richtungen, in denen die Erhöhungen in die Vertiefungen eingesetzt werden können, im rechten Winkel zueinander, so daß die Erhöhung in jede Vertiefung in vier um 90° zueinander versetzten Positionen einsetzbar ist.

Die Anordnung und Zuordnung zueinander der Vertiefungen gemäß den Ansprüchen 4 und 5 bzw. der Erhöhungen gemäß den Ansprüchen 6 bis 9 erhöhen die Vielzahl der möglichen Verbindungen weiter.

In der Ausgestaltung nach den Ansprüchen 10 und 11 können die Profilelemente auf einfache Weise hergestellt und genau auf den Bedarf am Einsatzort abgelängt werden.

Die Ausgestaltung der Ansprüche 12 und 13 vereinfacht die Verbindung der Profilelemente.

Die Ausgestaltung nach den Ansprüchen 14 bis 17 vereinfacht das lagegenaue Aneinandersetzen der Profilelemente.

Die Ansprüche 18 bis 24 beschreiben besonders bevorzugte Ausgestaltungen der Profilelemente.

Anspruch 25 beschreibt die Bestandteile eines bevorzugten Montageprofilsatzes.

Die Ansprüche 26 bis 28 beschreiben besonders bevorzugte Profilelemente zur Verwendung im erfindungsgemäßen Montageprofilsatz.

Ein vorteilhaftes Ausführungsbeispiel der erfindungsgemäßen Hängefördereinrichtung wird nachfolgend anhand der Zeichnungen näher erläutert. Es zeigen:
- Fig. 1: die Vorderansicht eines ersten Profilelementes in Form eines Schienenprofilstrangs,
- Fig. 2: die Seitenansicht des Schienenprofilstrangs aus Fig. 1,
- Fig. 3: die Vorderansicht eines ersten Profilelementes in Form eines Trägerprofilstrangs,
- Fig. 4: die Seitenansicht der Fig. 3,
- Fig. 5: eine Vorderansicht eines ersten Verbindungsstückes,
- Fig. 6: die Seitenansicht des Verbindungsstückes aus Fig. 5,
- Fig. 7: die Vorderansicht eines weiteren Verbindungsstückes,
- Fig. 8: die Seitenansicht des Verbindungsstückes aus Fig. 7,
- Fig. 9: die Vorderansicht eines weiteren Verbindungsstückes,
- Fig. 10: die Seitenansicht des Verbindungsstückes aus Fig. 9,
- Fig. 11: die Seitenansicht eines Anwendungsbeispiels,
- Fig. 12: die Vorderansicht der Fig. 11,
- Fig. 13: die Vorderansicht eines weiteren Anwendungsbeispiels,
- Fig. 14: die Vorderansicht eines weiteren Anwendungsbeispiels,
- Fig. 15: die Vorderansicht eines weiteren Anwendungsbeispiels,
- Fig. 16: die Vorderansicht eines weiteren Anwendungsbeispiels,
- Fig. 17: die Seitenansicht eines weiteren Anwendungsbeispiels,
- Fig. 18: die Vorderansicht der Fig. 17,
- Fig. 19: die Seitenansicht eines weiteren Anwendungsbeispiels, und
- Fig. 20: die Vorderansicht der Fig. 19.

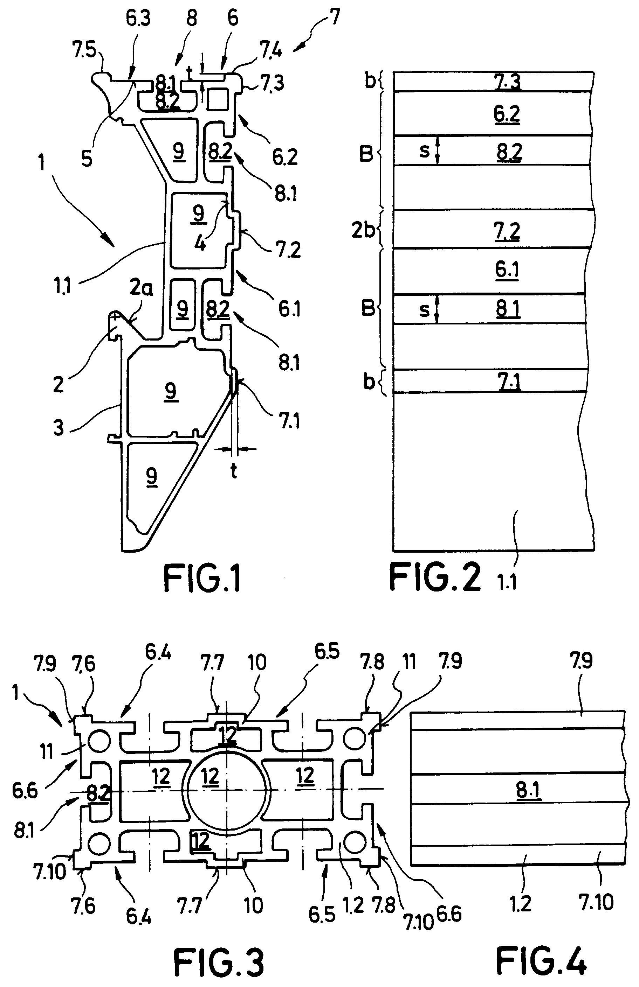

Aus den Fig. 1 und 2 bzw. 3 und 4 ist jeweils eine erstes Profilelement 1 eines Montageprofilsatzes zum Montieren von Schienen für eine Hängefördereinrichtung ersichtlich. Das aus den Fig. 1 und 2 ersichtliche Profilelement 1 ist als Schienenprofilstrang 1.1 ausgebildet. Der Schienenprofilstrang 1.1 besteht aus einem stranggepreßten Aluminiumprofil, an das eine Schiene 2 mit einer geneigten Lauffläche 2a sowie eine unterhalb der Schiene 2 angeordnete Führung 3 für einen Reibbandantrieb einstückig angeformt sind. Unterhalb der Schiene 2 und im Bereich der Führung 3 ist der Schienenprofilstrang 1.1 mit einem Querschnitt in Form eines im wesentlichen rechtwinkligen Dreiecks ausgestattet, wobei die Schiene 2 am rechten Winkel dieses dreieckigen Querschnitts angeordnet ist. Oberhalb der Schiene 2 enthält der Schienenprofilstrang 1.1 eine sich im wesentlichen senkrecht nach oben erstreckende rückwärtige Fläche 4, die sich an der der Schiene 2 gegenüberliegenden Seite des Schienenprofilstrangs 1.1 befindet sowie eine im wesentlichen senkrecht zur Oberfläche 4 verlaufende Oberfläche 5, die die Oberseite des Schienenprofilstrangs 1.1 bildet.

In beiden Oberflächen 4 und 5 sind Positionier-Vertiefungen 6 vorbestimmter Tiefe t eingeformt, wobei zwei der Vertiefungen 6.1 und 6.2 parallel nebeneinander über die Oberfläche 4 und eine dritte Vertiefung 6.3 senkrecht dazu über die Oberfläche 5 verlaufen. Die Vertiefungen 6 sind als sich über die gesamte Länge des Schienenprofilstrangs 1.1 erstreckende Nuten mit glatten, geraden, senkrecht zur jeweils anliegenden Oberfläche 4 und 5 und rechtwinklig zueinander verlaufenden bzw. leicht nach außen divergierenden, seitlichen Begrenzungsflächen ausgebildet. Alle Vertiefungen 6.1, 6.2 und 6.3 haben die gleiche Breite B.

Alle Vertiefungen 6 werden an beiden Seiten durch jeweils eine an den Oberflächen 4 und 5 angeordnete Anschlagfläche 7 begrenzt, wobei bei den parallel nebeneinander verlaufenden Vertiefungen 6.1 und 6.2 an den äußeren Seiten jeweils eine Anschlagfläche 7.1 und 7.3 vorgesehen ist, die die gleiche Breite b aufweisen, während die zwischen den beiden Vertiefungen 6.1 und 6.2 angeordnete Anschlagfläche 7.2, die den Zwischenraum zwischen den beiden Vertiefungen 6.1 und 6.2 vollständig ausfüllt, die doppelte Breite 2b aufweist. Die Anschlagflächen 7.4 und 7.5 neben der allein an der Oberfläche angeordneten Vertiefung 6.3 weisen wiederum die gleiche Breite b auf. Die Vertiefungen 6.1, 6.2 mit den Anschlagflächen 7.1 bis 7.3 füllen die Oberfläche 4 und die Vertiefung 6.3 mit den Anschlagflächen 7.4 und 7.5 die Oberfläche 5 vollständig aus.

Jede der Vertiefungen 6 enthält eine Schraubausnehmung 8 mit einem in einem Hohlraum 8.2 im Inneren des Schienenprofilstrangs 1.1 führenden Schlitz 8.1, wobei jeder Schlitz die gleiche Breite s aufweist und in einen Hohlraum 8.2 gleicher Größe führt.

Weitere Hohlräume 9 sind im Inneren des Schienenprofilstrangs 1.1 vorgesehen und können Hilfseinrichtungen, wie beispielsweise Versorgungsleitungen oder dgl., aufnehmen.

In den Fig. 3 und 4 ist ein weiteres erstes Profilelement 1 in Form eines Trägerprofilstrangs 1.2 dargestellt. Der Trägerprofilstrang 1.2 weist einen im wesentlichen rechteckigen Querschnitt mit zwei parallelen, gegenüberliegenden, langen Seiten 10 und zwei rechtwinklig dazu verlaufenden kurzen Seiten 11 auf. Die langen und die kurzen Seiten 10, 11 sind über ihre gesamte Fläche symmetrisch zu ihren jeweiligen Mittellinien mit Vertiefungen 6 und Anschlagflächen 7 versehen, die in Ausgestaltung und Abmessung identisch mit den Vertiefungen 6 und Anschlagflächen 7 der Fig. 1 und 2 sind. Der Trägerprofilsstrang 1.2 ist an seinen langen Seiten 10 mit jeweils zwei parallel nebeneinanderliegenden Vertiefungen 6.4 und 6.5 mit den zugehörigen, äußeren Anschlagflächen 7.6 und 7.8 einfacher Breite b und der dazwischenliegenden Anschlagfläche 7.7 doppelter Breite 2b versehen. Beide Schmalseiten 11 werden jeweils durch eine einzige Vertiefung mit beidseitigen, schmalen Anschlagflächen 7.9 und 7.10 gebildet. In jeder der Vertiefungen 6 ist wiederum die Schraubenausnehmung 8 aus dem mittigen Schlitz 8.1 und dem dahinterliegenden Hohlraum 8.2 größerer Breite vorgesehen.

Im Innenquerschnitt des Trägerprofilstrangs 1.2 sind durch Versteifungsrippen begrenzte Hohlräume 12 vorgesehen, die Hilfseinrichtungen, wie beispielsweise Versorgungsleitungen oder dgl. aufnehmen können.

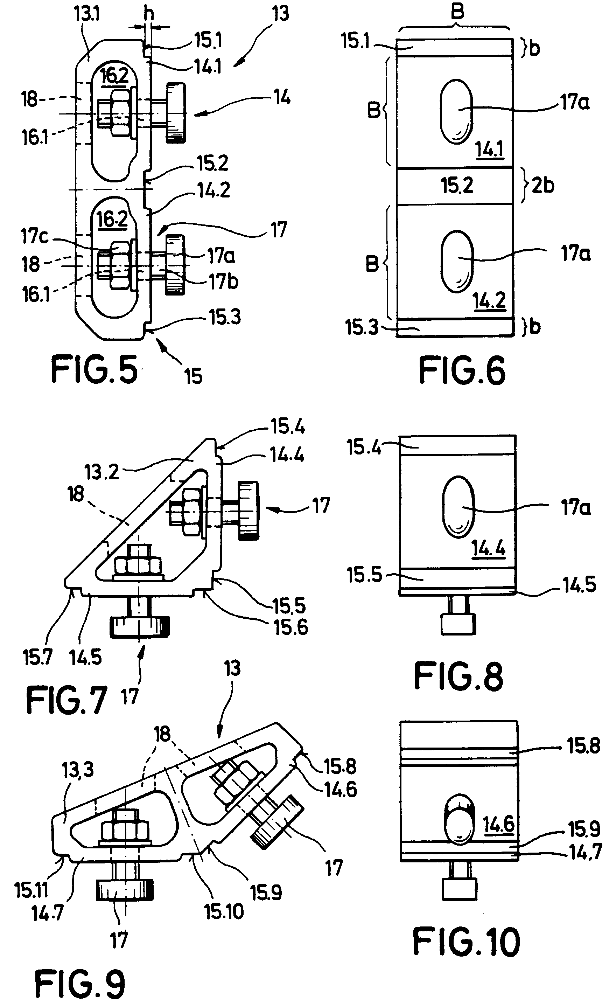

Aus den Fig. 5 bis 10 sind verschiedene Ausbildungen eines zweiten Profilelementes 13 ersichtlich. Das zweite Profilelement 13 der Fig. 5 und 6 ist als Parallelverbinder 13.1 ausgebildet und weist zwei paralle und fluchtend nebeneinanderliegende Erhöhungen 14.1 und 14.2 auf, deren Höhe h der Tiefe t und deren Breite B der Breite B der Vertiefungen 6 entspricht. Die Erhöhungen 14 haben einen rechteckigen Querschnitt mit glatten, geraden seitlichen Begrenzungswänden und sind derart an die Vertiefungen 6 angepaßt, daß sie in diese lagegesichert eingesetzt werden können, wobei ihre Stirnfläche am Grund der Vertiefung anschlägt. Die Erhöhungen 14 sind durch Anschlagflächen 15 voneinander getrennt, die analog der Anschlagflächen 7 beidseitige jeder Erhöhung angeordnet und bemessen sind. So sind an den Außenseiten der parallel liegenden Erhöhungen 14.1 und 14.2 Anschlagflächen 15.1 und 15.3 einfacher Breite b und zwischen den Erhöhungen 14.1 und 14.2 eine einzige Anschlagfläche 15.2 doppelter Breite 2b angeordnet, die den Zwischenraum zwischen den beiden Erhöhungen vollständig ausfüllt.

Der Parallelverbinder 13.1 wurde aus einem Profilstrang in einer Breite B geschnitten, die der Breite B der Vertiefungen und der Breite B jeder Erhöhung 14.1, 14.2 senkrecht dazu entspricht, so daß die Erhöhungen B in Draufsicht (Fig. 6) quadratisch sind. Diejenigen Seiten der Erhöhungen 14.1 und 14.2, die an der Schnittkante beim Ausschnitt aus dem Profilstrang liegen, sind nicht mit Anschlagflächen versehen.

Durch jede der Erhöhungen 14.1 und 14.2 erstreckt sich jeweils eine Durchgangsbohrung 16.1 einer Befestigungseinrichtung, die in einen im Inneren des Parallelverbinders 13.1 gelegenen Hohlraum 16.2 mündet. Durch die Bohrung 16.1 erstreckt sich jeweils eine Befestigungsschraube 17, die einen mit einem langgestreckten Klemmkopf 17a versehenen Gewindeschaft 17b aufweist, der mit einer über ein Zugangsloch 18 im Profilelement 13 zugänglichen Gegenmutter 17c gesichert werden kann. Der Klemmkopf 17a ist in einer Richtung schmaler als der Schlitz 8.1 und in der anderen Richtung größer als die Schlitzbreite des Schlitzes 8.1 aber kleiner als der Hohlraum 8.2, so daß das Klemmstück 17a in den Schlitz 8.1 eingeführt und nach einer Drehung des Klemmstückes 2a um etwa 90° festgezogen werden kann, so daß das zweite Profilelement 13 am ersten Profilelement 1 befestigt werden kann.

Die Fig. 7 und 8 zeigen ein weiteres, zweites Profilelement 13, das in Form eines Winkelverbinders 13.2 ausgebildet ist und einen Querschnitt in Form eines rechtwinkligen Dreiecks aufweist. Jeder der senkrecht zueinander verlaufenden Seiten des Winkelverbinders 13.2 ist mit jeweils einer einzelnen Erhöhung 14.4 und 14.5 versehen, die jeweils durch Anschlagflächen 15.4, 15.5, 15.6 und 15.7 einfacher Breite b begrenzt sind. Die Abmessungen der Erhöhung 14.4 und 14.5 entsprechen den Abmessungen der Erhöhungen 14.1 und 14.2. Die Abmessungen der Anschlagflächen 15.4, 15.5, 15.6 und 15.7 entsprechen den einfachen Anschlagflächen 15.1 und 15.3. Jede der Erhöhungen 14.4 und 14.5 ist weiterhin mit jeweils einer der oben beschriebenen Befestigungsschrauben 17 versehen.

Die Fig. 9 und 10 zeigen ein weiteres, zweites Profilelement 13 in Form eines Winkelverbinders 13.3. Der Winkelverbinder 13.3 hat einen Querschnitt mit zwei im Winkel von 45° zueinander verlaufenden Oberflächen, an denen jeweils eine Erhöhung 14.6 und 14.7 vorgesehen ist, die in ihren Breiten B und Höhen h den Erhöhungen 14.1 und 14.2 entsprechen.

Auch die Erhöhungen 14.6 und 14.7 sind durch jeweils eine Anschlagfläche 15.8, 15.9, 15.10 und 15.11 einfacher Breite b begrenzt. Es sind wiederum die bereits oben beschriebenen Befestigungsschrauben 17 vorgesehen, und der Winkelverbinder 13.3 ist wie auch der Winkelverbinder 13.2 und der Parallelverbinder 13.1 aus einem Profilstrang in einer Breite B geschnitten.

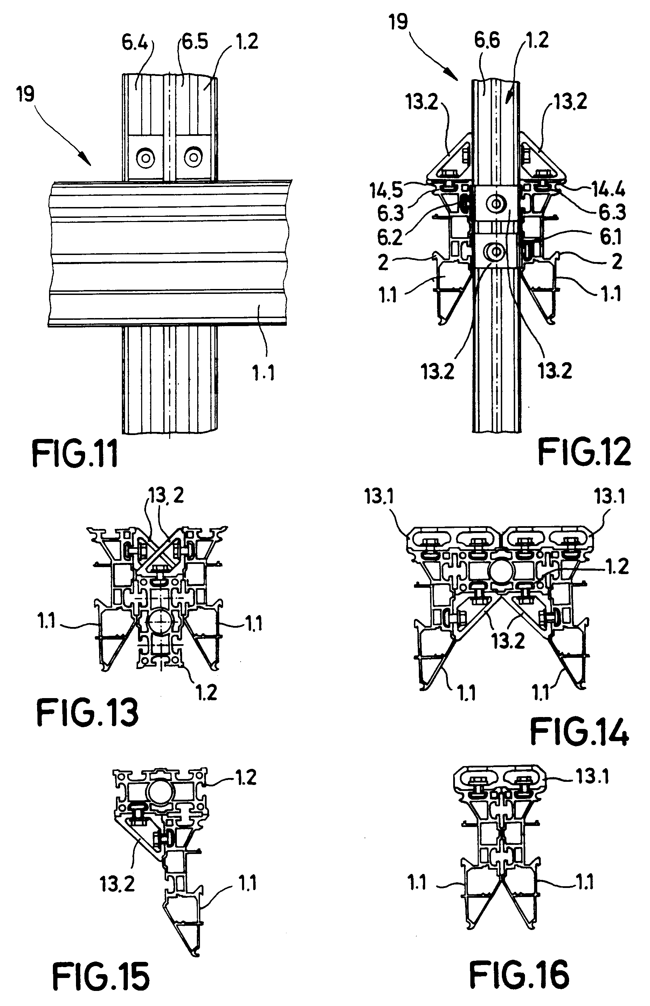

In den Fig. 11 bis 20 wird eine Auswahl aus der sehr großen Vielfalt von Anwendungsmöglichkeiten und Zusammenstellungen der einzelnen Profilelemente 1 und 13 zur Montage eines Schienensystems einer Hängefördereinrichtung 19 gezeigt.

Die Fig. 11 und 12 zeigen eine Kreuzverbindung mit einem Schienenprofilstrang 1.1 und einem als senkrechte Stütze eingesetzten Trägerprofilstrang 1.2. Der Schienenprofilstrang 1.1 und der Trägerprofilstrang 1.2 werden kreuzweise aufeinandergelegt, wobei die Anschlagflächen 7 beider Profilstränge aneinander anschlagen. Zur Verbindung der beiden Profilstränge 1.1 und 1.2 miteinander werden acht 90°-Winkelverbinder 13.2 eingesetzt. Dabei verbinden zwei Winkelverbinder 13.2 an der in Fig. 12 linken Seite des Trägerprofilstrangs 1.2 die dort angeordneten Vertiefungen 6.4 und 6.5 mit der Vertiefung 6.3 an der Oberseite des Schienenprofilstrangs 1.1. Dabei werden die Erhöhungen 14.4 des Winkelverbinders 13.2 in den korrepondierenden Vertiefungen 6.4 und 6.5 und die Erhöhungen 14.5 in der Vertiefung 6.3 des Schienenprofilsstrangs 1.1 aufgenommen. Spiegelbildlich dazu sind die Erhöhungen 14.5 der Winkelverbinder 13.2 an der rechten Seite der Fig. 12 in die Vertiefungen 6.4 und 6.5 des Trägerprofilsstranges 1.2, sowie die Vertiefungen 14.4 in die Vertiefung 6.3 an der Oberseite des Schienenprofilstranges 1.1 eingesetzt. Zusätzlich zu diesen Winkelverbindern 13.2 an der Oberseite des Schienenprofilstranges 1.1 werden auch die senkrecht verlaufenden, einzelnen Vertiefungen 6.6 beidseitig des Trägerprofilstranges 1.2 durch jeweils zwei 90°-Winkelverbinder 13.2 mit den Schienenprofilsträngen 1.1 verbunden. Dabei ist die Erhöhung 14.4 des in Fig. 12 untersten Winkelverbinders 13.2 in die Vertiefung 6.1 des rechten Schienenprofilstranges 1.1 und die Erhöhung 14.5 des oberen Winkelverbinders 13.2 in die obere Vertiefung 6.2 des linken Schienenprofilstranges 1.1 eingesetzt. Um eine noch bessere Befestigung zu erreichen, kann auf der in Fig. 12 hinteren Seite die Anordnung der dortigen Winkelverbinder 13.2 vertauscht werden.

Fig. 13 zeigt ein weiteres Anwendungsbeispiel des erfindungsgemäßen Montageprofilsatzes, wobei zwei Schienenprofilstränge 1.1 durch zwei 90°-Winkelverbinder 13.2 mit einer Schmalseite eines Trägerprofilstranges 1.2 verbunden werden. Die Verbindung erfolgt wie oben beschrieben, die Erhöhungen der Winkelverbinder an der gewünschten Stelle in die Vertiefungen der ersten Profilelemente 1 eingesetzt werden.

Fig. 14 zeigt ein weiteres Anwendungsbeispiel des erfindungsgemäßen Montageprofilsatzes, bei dem zwei Schienenprofilstränge 1.1 mit innenliegenden Winkelverbindern 13.2 und außenliegenden Parallelverbindern 13.1 an einem mittig angeordneten Trägerprofilstrang 1.2 befestigt werden.

Fig. 15 zeigt ein Anwendungsbeispiel, bei dem ein einziger Schienenprofilstrang 1.1 mit Hilfe eines Winkelverbinders 13.2 an der Breitseite eines Trägerprofilstranges 1.2 befestigt ist.

Fig. 16 zeigt die Verbindung zweier Schienenprofilstränge 1.1 über einen Parallelverbinder 13.1, ohne Zwischenschaltung eines Trägerprofilstranges. Dabei werden die Erhöhungen 14.1 und 14.2 des Parallelverbinders 13.1 jeweils in die Vertiefung 6.3 an der Oberseite jedes Schienenprofilstrangs 1.1 eingesetzt.

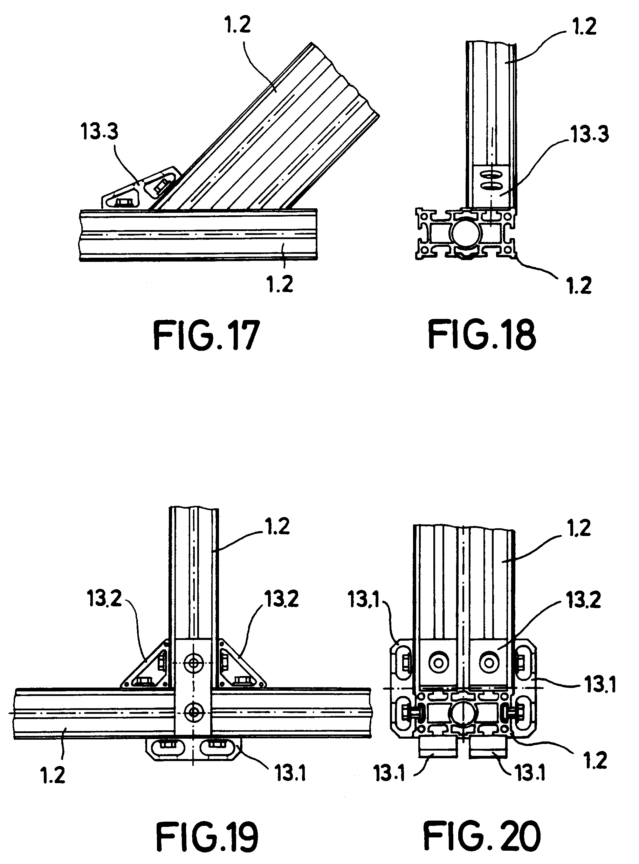

Die Fig. 17 bis 20 zeigen mögliche Verbindungen zwischen Trägerprofilsträngen. Die Fig. 17 und 18 zeigen die Verbindung zweier Trägerprofilstränge 1.2 unter einem Winkel von 45° unter Verwendung des 45°-Winkelverbinders 13.3. Im dargestellten Ausführungsbeispiel ist die Erhöhung 15.7 des Winkelverbinders 13.3 in die Vertiefung 6.5 des unteren Profilstranges 1.2, sowie die Erhöhung 14.6 in die Vertiefung 6.6 des oberen Trägerprofilstranges 1.2 eingesetzt.

Die Fig. 19 und 20 zeigen eine sehr belastbare T-Verbindung zwischen zwei Trägerprofilsträngen 1.2 mit Hilfe von vier Parallelverbindern, die jeweils im Scheitel und an den Seiten der T-Verbindung angeordnet sind, und vier 90°-Winkelverbinder 13.2, die in den Winkelkehlen der T-Verbindung angeordnet sind.

Schon diese kleine Auswahl zeigt die äußerst vielfältige Einsetzbarkeit des erfindungsgemäßen Montageprofilsatzes zum Montieren von Schienen. Es hat sich herausgestellt, daß mit diesem Montageprofilsatz die Mehrzahl aller Anwendungsfälle abgedeckt werden können.

In Abwandlung des beschriebenen und gezeichneten Ausführungsbeispiele ist es jedoch auch möglich, beispielsweise die Schiene gesondert an einem Trägerprofil zu befestigen, und nicht einstückig mit ihm auszubilden. Für viele Verwendungszwecke wird es weiterhin ausreichen, wenn pro Profilelement nur zwei Vertiefungen und Erhöhungen vorgesehen sind. Es ist auch möglich, die Erhöhungen beispielsweise sechseckig oder rund auszubilden, wodurch sich die Vielfalt der Montagemöglichkeiten weiter erhöht.

## Patentansprüche

1. Hängefördereinrichtung (19) mit einem Montageprofilsatz (1, 13) zum Montieren eines Schienensystems (2), der wenigstens ein mit einer Mehrzahl von Vertiefungen (6) gleicher Breite (B) versehenes, erstes Profilelement (1) und wenigstens ein mit einer Mehrzahl in die Vertiefung (6) einsetzbaren Erhöhungen (14) versehenes zweites Profilelement (13) enthält, wobei die Breite (B) jeder Erhöhung (14) in Draufsicht in zwei winklig zueinander verlaufenden Richtungen gleich ist und der Breite (B) jeder Vertiefung (6) in Draufsicht entspricht.

2. Hängefördereinrichtung nach Anspruch 1, **dadurch gekennzeichnet,** daß die Erhöhungen (14) und Vertiefungen (6) als Positioniererhöhungen und -vertiefungen mit glatten Seitenwänden ausgebildet sind und daß zusätzlich eine Befestigungseinrichtung (8, 17) vorgesehen ist.

3. Hängefördereinrichtung nach Anspruch 1 oder 2, **dadurch gekennzeichnet,** daß die Erhöhung (14) in Draufsicht quadratisch ist.

4. Hängefördereinrichtung nach einem der Ansprüche 1 bis 3, **dadurch gekennzeichnet,** daß am ersten Profilelement (1) wenigstens zwei im Winkel zueinander verlaufende Vertiefungen (6) vorgesehen sind.

5. Hängefördereinrichtung nach einem der Ansprüche 1 bis 4, **dadurch gekennzeichnet,** daß am ersten Profilelement (1) wenigstens zwei parallel nebeneinanderliegende und wenigstens eine winklig dazu verlaufende Vertiefung (6) vorgesehen ist.

6. Hängefördereinrichtung nach einem der Ansprüche 1 bis 5, **dadurch gekennzeichnet,** daß am zweiten Profilelement (13) zwei Erhöhungen (14) benachbart und fluchtend zueinander angeordnet sind.

7. Hängefördereinrichtung nach einem der Ansprüche 1 bis 6, **dadurch gekennzeichnet,** daß am zweiten Profilelement (13) zwei Erhöhungen (14) im Winkel Zueinander angeordnet sind.

8. Hängefördereinrichtung nach Anspruch 5 oder 7, **dadurch gekennzeichnet,** daß der Winkel 90° beträgt.

9. Hängefördereinrichtung nach Anspruch 5 oder 7, **dadurch gekennzeichnet,** daß der Winkel 45° beträgt.

10. Hängefördereinrichtung nach einem der Ansprüche 1 bis 9, **dadurch gekennzeichnet,** daß das erste Profilelement (1) aus einem durchgehenden Profilstrang geschnitten ist, wobei sich die Vertiefung (6) als Nut in Längsrichtung des Profilstrangs erstreckt.

11. Hängefördereinrichtung nach einem der Ansprüche 1 bis 10, **dadurch gekennzeichnet,** daß das zweite Profilelement (13) aus einem durchgehenden Profilstrang in einer der Breite (B) der Vertiefung (6) entsprechenden Länge geschnitten ist.

12. Hängefördereinrichtung nach einem der Ansprüche 1 bis 11, **dadurch gekennzeichnet,** daß die Vertiefung (6) mit einer Schraubausnehmung (8) versehen ist.

13. Hängefördereinrichtung nach Anspruch 12, **dadurch gekennzeichnet,** daß sich die Schraubausnehmung als mit einem Hohlraum (8.2) hinterschnittenen Schlitz (8.1) über die gesamte Länge der Vertiefung (6) erstreckt.

14. Hängefördereinrichtung nach einem der Ansprüche 1 bis 13, **dadurch gekennzeichnet,** daß am ersten und am zweiten Profilelement (1, 13) Anschlagflächen (7, 15) vorgesehen sind, die miteinander in Eingriff stehen, wenn die Erhöhung (14) in der Vertiefung (6) aufgenommen ist.

15. Hängefördereinrichtung nach Anspruch 14, **dadurch gekennzeichnet,** daß jeweils eine Anlagefläche (7, 15) die Vertiefung (6) und die Erhöhung (15) an zwei einander gegenüberliegenden Seiten begrenzt.

16. Hängefördereinrichtung nach Anspruch 14 oder 15, **dadurch gekennzeichnet,** daß die Anlageflächen (7, 15) die gleiche Breite (b) oder ein ganzzahliges Vielfaches davon aufweisen.

17. Hängefördereinrichtung nach Anspruch 15 oder 16, **dadurch gekennzeichnet,** daß zwischen zwei parallel nebeneinanderliegenden Vertiefungen (6) oder Erhöhungen (14) eine durchgehende, beiden Vertiefungen (6) oder Erhöhungen (14) zugeordnete Anlagefläche (7.2, 7.7, 15.2) doppelter Breite (b) vorgesehen ist.

18. Hängefördereinrichtung nach einem der Ansprüche 1 bis 17, **dadurch gekennzeichnet,** daß das erste Profilelement (1) als Träger (1.2) ausgebildet ist und mit wenigstens zwei fluchtend und parallel nebeneinander und wenigstens einer winklig dazu angeordneten Vertiefung (6) versehen ist.

19. Hängefördereinrichtung nach Anspruch 18, **dadurch gekennzeichnet,** daß der Träger (1.2) einen rechteckigen Querschnitt aufweist, dessen lange Seiten durch jeweils zwei fluchtend und parallel nebeneinanderliegende und dessen schmale Seiten durch jeweils eine Vertiefung (6) gebildet sind.

20. Hängefördereinrichtung nach Anspruch 18 oder 19, **dadurch gekennzeichnet,** daß im Inneren des Trägers (1.2) ein Aufnahmehohlraum (12) zur Aufnahme von Hilfseinrichtungen vorgesehen ist.

21. Hängefördereinrichtung nach einem der Ansprüche 1 bis 20, **dadurch gekennzeichnet,** daß das erste Profilelement (1) an einem die Schiene (2) enthaltenden Schienenprofilstrang (1.1) angeformt ist.

22. Hängefördereinrichtung nach Anspruch 21, **dadurch gekennzeichnet,** daß der Schienenprofilstrang (1.1) wenigstens zwei parallel nebeneinanderliegende und wenigstens eine winklig dazu verlaufende Vertiefung (6.1, 6.2 und 6.3) aufweist.

23. Hängefördereinrichtung nach Anspruch 21 oder 22, **dadurch gekennzeichnet,** daß der Schienenprofilstrang (1.1) eine Führungsausnehmung (3) für einen Antrieb enthält.

24. Hängefördereinrichtung nach einem der Ansprüche 21 bis 23, **dadurch gekennzeichnet,** daß im Schienenprofilstrang (1.1) ein Aufnahmehohlraum (9) zur Aufnahme von Hilfseinrichtungen vorgesehen ist.

25. Hängefördereinrichtung nach einem der Ansprüche 1 bis 24, mit wenigstens einem Trägerprofilstrang (1.2) mit rechteckigem Querschnitt, an dessen langen Seiten jeweils zwei fluchtend und parallel nebeneinander symmetrisch zur Quermittellinie angeordnete Vertiefungen (6.4, 6.5) und an dessen kurzen Seiten jeweils eine Vertiefung (6.6) symmetrisch zur Längsmittellinie angeordnet ist, mit wenigstens einem Schienenprofilstrang (1.1) an dessen einer Schiene (2) abgewandten, nach oben weisenden Oberfläche (5) eine Vertiefung (6.3) symmetrisch zur Mittellinie angeordnet ist, und der zwei fluchtend und parallel nebeneinander angeordnete Vertiefungen (6.1, 6.2) an einer dazu senkrechten Oberfläche (4) aufweist, und mit wenigstens einem Verbindungsstück (13) mit zwei Erhöhungen (14).

26. Profilelement für einen Montageprofilsatz einer Hängefördereinrichtung nach einem der Ansprüche 1 bis 25, **gekennzeichnet durch** seine einstückige Ausbildung mit einer Schiene (2) in Form eines Schienenprofilstrangs (1.1), und durch wenigstens zwei im Winkel zueinander angeordnete und in Längsrichtung des Profilsstrangs (1.1) verlaufende Vertiefungen (6).

27. Profilelement für einen Montageprofilsatz einer Hängefördereinrichtung nach einem der Ansprüche 1 bis 25, **gekennzeichnet durch** seine Ausbildung als Trägerprofilstrang (1.2) mit wenigstens drei in Längsrichtung des Trägerprofilstrangs (1.2) verlaufenden Vertiefungen (6.4, 6.5 und 6.6), wobei zwei der Vertiefungen (6.4, 6.5) parallel und fluchtend zueinander angeordnet sind und die dritte Vertiefung (6.6) im Winkel dazu verläuft.

28. Profilelement für einen Montageprofilsatz einer Hängefördereinrichtung nach einem der Ansprüche 1 bis 25, **gekennzeichnet durch** seine Ausbildung als Verbindungsstück (13) mit wenigstens zwei Erhöhungen (14).
